# EUROPEAN PATENT APPLICATION

(11) **EP 1 988 309 A2**
(43) Date of publication of application: **05.11.2008**
(21) Application number: 08103062.9
(22) Date of filing: 28.03.2008
(51) Int. Cl.: F16H 47/04

(54) **Transmission apparatus for endotermic-driven machines**

(30) Priority: 29.03.2007 IT MI20070628
(71) Applicant: SO.RE.MA Ferroviaria S.p.A., 15057 Tortona (Alessandria) (IT)
(72) Inventor: Rossanigo, Cesare, 15042 Bassignana (Alessandria) (IT)
(74) Representative: Ponzellini, Gianmarco

(57) **Abstract**

A transmission apparatus for endothermic-driven machines comprising: at least one drive unit (2) of the hydraulic type, suitable for connection to an endothermic engine (M) of a traction machine for receiving a mechanical power from the endothermic engine (M) and transmitting at least part of said mechanical power in a regulated manner to a driven shaft (A) connected to one or more driving wheels (R) of the traction machine; at least one reduction unit (6), active between the drive unit (2) and the driven shaft (A), so as to vary the gear ratio between the number of revolutions of the endothermic engine (M) and the number of revolutions of said driving wheels (R), in a continuous manner and along the whole operating range of the traction machine. The apparatus (1) further comprises regulation means (10) acting on the reduction unit (6) so as to continuously vary the gear ratio along the operating range of the traction machine.

## Description

The present invention relates to a transmission apparatus for endothermic-driven machines.

The present apparatus applies to operation and motion transmission in vehicles equipped with endothermic engines and having a high rated load, preferably of the Diesel type, and more particularly its peculiar and advantageous application is in the field of railway vehicles.

In accordance with an alternative principle of use, a further advantageous application of the apparatus of the present invention is in the field of manufacturing and working machines, and more particularly in the equipment of farm tractors.

In endothermic-driven machines or vehicles of known type, and more particularly in machines having high delivered-power values, a gearing is interposed between the endothermic engine and the driven shaft connected to the wheels, said gearing having the function of producing an optimal gear ratio between the number of revolutions of the motor and the number of revolutions of the driven shaft so as to lead the motor to operate to a running condition which is as much as possible close to its optimal running condition, irrespective of the speed taken by the machine itself. This is linked to the fact that the thermodynamic efficiency of the endothermic engine greatly decreases when the number of revolutions of the motor departs from the optimal one.

Gearings or gear drives of known type are adapted to generate a predetermined number of gear ratios, linked to corresponding toothed gear combinations present in the transmission. In this type of transmission that is therefore of the discrete type, mutual coupling of toothed wheels is required, which wheels in order to be mutually engaged and disengaged must be temporarily disconnected from the normal mechanical-power flow so as to avoid impacts and irreversible damages to the wheels themselves.

Therefore, gearings are associated with power disconnecting members, in particular mechanical friction clutches.

Disadvantageously, mechanical friction clutches generate dissipation of part of the transmitted power, under conditions of engagement and disengagement transients. In addition, in mechanical friction clutches the higher the transmitted powers the poorer the performance of same is, and in particular it has been noticed that the duration and reliability values of the mechanical friction clutches advise against use of these friction clutches in applications in which there are high power exchanges, and in particular in the railway field.

It should be also highlighted that gearings are often governed by manual operation through the so-called "gearshifts" or change gears. Should not this manual operation be done in a cautious manner, it would lead the machine to run at non optimal running conditions, i.e. too low or too high running conditions, and this would result in a reduction in the overall efficiency of the machine.

Also known is use of transmissions of the semi-hydrostatic type, in which the endothermic engine is mechanically connected, through a reduction unit, to a driven shaft connected to the user base, in particular to the driving wheels. The reduction unit has a gear ratio that can be continuously varied along part of the operating range of the machine, i.e. part of the whole speed range of the machine itself. Variation in the gear ratio is obtained by a hydrostatic operation acting on the reduction unit.

Disadvantageously, in these transmissions of the semi-hydrostatic type adoption of a gearing with mechanical coupling is required, which is generally installed downstream of the reduction unit, at least for switching between a "slow running" typical of operation with heavy loads and low speeds, and a "fast running" typical of operation without load or with small and light loads and high speeds. This is due to the limited flexibility of the endothermic engine that is directly and mechanically connected to the reduction unit and that, being a Diesel engine, has a very limited optimal range of running conditions. Without adopting a gearing with mechanical coupling, the machine would offer reduced performance, in particular in terms of limited speed and non-optimised power delivery.

In addition, said switching between slow running and fast running would require use of a mechanical friction clutch which would cause the already described inconveniences. Likewise, if switching would be carried out with a motionless vehicle, to engage the gears for fast running for example, performance of the vehicle at the pickup would be greatly penalised because due to stopping of the vehicle for engaging the gears for fast running, said vehicle would be obliged to start being at a standstill with a more unfavourable gear ratio, since the latter is associated with an optimal application at high speeds but is quite unsuitable for rapid acceleration (pickup), above all under conditions of heavy loads.

Semi-hydrostatic transmissions of known type further have the additional disadvantage of requiring complicated construction expedients for reversing the running direction, which are particularly connected with the necessity to provide complex reversal members adapted to reverse rotation of the driven shaft.

The technical task of the present invention is to make available a transmission apparatus for endothermic-driven machines substantially free from the above mentioned drawbacks.

Within the scope of this technical task, it is a main aim of the invention to make available a transmission apparatus for endothermic-driven machines having high reliability together with high overall efficiency.

Another important aim of the invention is to make available a transmission apparatus for endothermic-driven machines offering high flexibility of use in particular within a wide range of running speeds.

It is a further aim of the invention to provide a transmission apparatus for endothermic-driven machines of simple construction and cheap manufacture.

A still further aim of the invention is to provide a transmission apparatus for endothermic-driven machines capable of leading the endothermic engine to operate in a substantially independent manner, to running conditions and loads close to the best values, depending on the machine's operating requirements.

The foregoing and still further aims that will become apparent in the progress of the present description are substantially achieved by a transmission apparatus for endothermic-driven machines having the features set out in claim 1 and/or in one or more of the claims depending thereon.

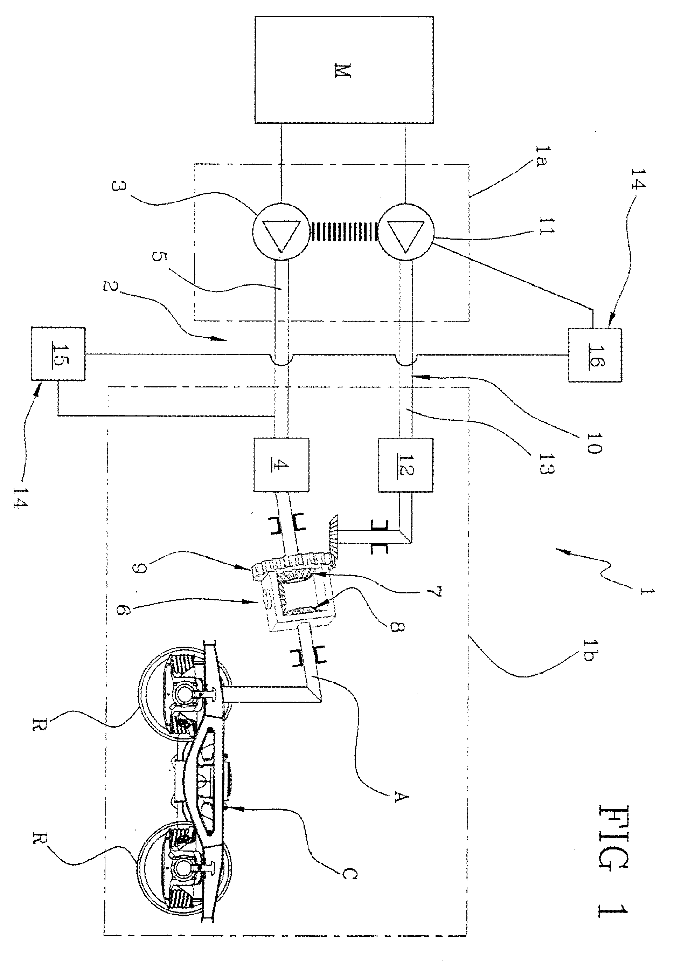

A preferred but not exclusive embodiment of a transmission apparatus for endothermic-driven machines in accordance with the present invention is now illustrated by way of non-limiting example and a diagrammatic view of same is represented in the accompanying Fig. 1, said apparatus being generally identified by reference numeral 1.

Apparatus 1 can be used on traction machines of the endothermic type, and preferably of the type having high power delivery. More preferably, apparatus 1 advantageously applies to tractors, in particular farm tractors and railway machines.

Apparatus 1 comprises a first portion 1a to be directly associated with an endothermic engine "M" of the traction machine 1, and in particular a Diesel engine, and a second portion 1b to be directly associated with one or more driving wheels "R" of the traction machine, and more preferably with a driven shaft "A" moving said driving wheels "R".

In the particular case of application on a railway machine, the first portion 1a of apparatus 1 is installed on the machine body in which the endothermic motor "M" is also housed, while the second portion 1b can be installed on a railway bogie of the machine itself. The two portions 1a, 1b of apparatus 1 are connected to each other so as to carry out mutual transmission of a motive power following modalities to be described in the following.

Apparatus 1 comprises a drive unit 2 of the hydraulic, preferably hydrostatic, type which is mechanically connected to the endothermic engine "M" for receiving power therefrom and transmitting at least part of this power to one or more of said driving wheels "R". It is to be pointed out that in the present treatment by the expression "drive of the hydraulic type" it is intended a power converting a mechanical action generated in this specific case by the endothermic engine "M", into conveyance of a pressure value to a working fluid. Within the present invention, used as fluid under pressure can be any fluid adapted to transmit high pressures typical of an employment in power drives such as drives in the traction field. Preferably, this fluid is oil.

In accordance with a preferred embodiment of the present invention, the hydraulic drive unit 2 further performs the function of re-converting the power supplied to the fluid into mechanical energy returned to the driven shaft "A" and/or the driving wheels "R".

Advantageously, the dual power conversion in which power is first transferred from the endothermic engine "M" to the fluid under pressure and subsequently from the same fluid under pressure to the driven shaft "A" allows connections between the endothermic engine "M" and driving wheels "R" to be greatly simplified, because in this case power transfer between the endothermic engine "M" and driving wheels "R" exclusively requires that suitably sized pipelines be adopted so as to deal with the pressure values of the fluid. Moreover, these connections enable great construction flexibility since the pipelines can be installed in different configurations depending on predetermined spatial requirements, which is an important advantage in the railway field, where bogies "C" for construction reasons and due to the necessity to restrict their mass, always have less useful room for housing the members required for traction and motion transmission. The first portion 1a of the drive unit 2 comprises a first hydraulic pump 3, mechanically connected to the endothermic engine "M" for receiving a mechanical power therefrom and transferring at least part of same to said working fluid. The first hydraulic pump 3 is preferably directly connected to the endothermic engine "M" and more preferably is stably connected to the endothermic engine "M" itself, to flanged portions suitably made on the endothermic engine "M", for example.

The corresponding second portion 1b of apparatus 1 comprises a first hydraulic motor 4, brought into fluid communication with said first hydraulic pump 3 for receiving an input motive power from said working fluid and transferring part of this motive power to the driving wheels "R" and/or the driven shaft "A" of the traction machine.

In accordance with what mentioned above, fluid communication between the first hydraulic pump 3 and first hydraulic motor 4 takes place by one or more first ducts 5 of the type adapted to convey a fluid under pressure. More preferably, the first hydraulic pump 3 and first hydraulic motor 4 are exclusively connected by this fluid communication. The first hydraulic pump 3 is preferably a piston pump and more preferably a variable displacement pump. The last-mentioned condition results in the possibility of varying in a regulated manner, at least one flow rate of the working fluid delivered from the hydraulic pump 3 itself, in such a manner that power transmitted to the corresponding first hydraulic motor 4 and therefore to the driving wheels "R" can be varied. Preferably, the first hydraulic motor 4 too is of the piston type and more preferably of the fixed displacement type as the flow rate of the working fluid has been already determined by displacement of the first hydraulic pump 3.

Downstream of the drive unit 2 relative to a normal power flow from the endothermic engine "M" to the driving wheels "R", apparatus 1 comprises a reduction unit 6 acting between the drive unit 2 and in particular the first hydraulic motor 4, and the driven shaft "A", to regulate a rotation speed of the driven shaft "A" so as to cause and vary a gear ratio between a rotation speed of the endothermic engine "M" and the number of revolutions of the driven shaft "A". The reduction unit 6 is part of the second portion 1b of apparatus 1 and in the case of a railway machine is housed in bogie "C". Preferably, in addition, the reduction unit 6 and the first hydraulic motor 4 are directly connected to each other by a mechanical coupling.

Advantageously, the reduction unit 6 comprises a mechanical transmission, of the type that does not comprise mechanical coupling members. In this way the necessity to use mechanical friction clutches can be easily eliminated, which friction clutches would be on the contrary necessary, should a gearshift transmission, and therefore a transmission with discrete values of the gear ratio, be used.

In more detail, the reduction unit 6 comprises a kinematic arrangement having a triad 7, 8, 9 of rotating members interconnected with each other to carry out mutual and simultaneous transmission of a rotation motion. A first one 7 of said rotating members 7, 8, 9 is connected, preferably directly, to a power flow from the drive unit 2, and more preferably a power flow from the first hydraulic motor 4. A second one 8 of said rotating members 7, 8, 9 is connected, preferably directly, to the driven shaft "A" connected to the driving wheels "R". The third rotating member 9 is connected to regulation means 10 which is directly active on said third rotating member 9 to directly influence a rotation speed of the second rotating member 8 relative to the first rotating member 7. In this way the regulation means 10 generates a variation in the gear ratio of the reduction unit 6.

Advantageously, a type of kinematic arrangement of the above described type allows the gear ratio of the reduction unit 6 to be continuously varied, because by adjusting the rotation speed of the third rotating member 9 relative to the two other rotating members 7, 8, it is possible, even if the rotation speed of one of the two other rotating members 7, 8 is maintained constant, to continuously adjust the rotation speed of the other rotating member 7, 8. The rotation speeds of the three rotating members 7, 8, 9 in fact are linked to each other in an indissoluble manner by mutual rolling conditions, in particular obtained through toothed couplings between contact surfaces of the three rotating members 7, 8, 9. Therefore, the regulation means 10 by acting on the third rotating member 9, allows an instantaneous and continuous variation in the gear ratio.

According to a first embodiment of the invention, the reduction unit 6 comprises an epicyclical train having a central pinion, an outer crown and a fork for supporting a plurality of planetary gears interposed between the central pinion and the outer crown. In this epicyclical train the three rotating members 7, 8, 9 are arbitrarily defined by said central pinion, said outer crown and said supporting fork.

In accordance with a second embodiment, the reduction unit 6 comprises a mechanical differential having an outer crown and a pair of pinions rotating about the same axis and kinematically connected to each other for carrying out mutual transmission of a rotation motion. Said crown and the two pinions arbitrarily define the three rotating members 7, 8, 9 of the reduction unit 6.

Considering a starting condition of the machine, the first rotating member 7 receives a motive power originally produced by the endothermic engine "M" while the second rotating member 8 is submitted to a resisting action also of great amount, linked to resisting actions produced by the machine inertia, the inertia of possible towed loads, by friction and/or further resisting forces. Leaving the third rotating member 9 free to rotate, the latter does not offer resistance to rotation and substantially fully absorbs power received from the reduction unit 6 because said power does not tend to flow in the direction of the second rotating member 8. As a result, the third rotating member 9, if it is left free to rotate, takes a non-zero rotation speed of its own precluding the pickup possibility of the machine. This condition substantially corresponds to an idling running of a generic motor-vehicle.

However, should even a minimum resisting action be applied to the third rotating member 9, by a brake for example, a very small power part would also reach the second rotation member 8, thereby transmitting a mechanical power to the driving wheels "R". In a limit condition in which the third rotating member 9 should be fully locked, all power delivered by the endothermic engine "M" after losses due to friction and dissipation, would be conveyed to the second rotating member 8, and therefrom to the driving wheels "R". This condition would substantially correspond to a "direct-drive" running.

It can be deduced that, by modulating a braking action applied to the third rotating member 9, the machine is allowed to take any law of motion included between a condition of motionless vehicle and a condition of maximum speed.

Advantageously, by suitably dimensioning the three rotating members 7, 8, 9 relative to each other it is also possible to associate a maximum speed with the condition of third rotating member 9 at a standstill, which maximum speed is in accordance with applications of railway Diesel traction at medium and high speed. At all events, the reduction unit 6 of the above described type and the related regulation means 10 associated therewith allow the gear ratio to be continuously varied along the whole operating range of the machine, i.e. along the whole speed range of the machine itself extending from a zero-speed value to a maximum-speed value.

In addition, should a motive torque be applied to the third rotating member 9 in the same way as said braking torque also after stopping of the third rotating member 9 itself, an effect of further increase of the rotation speed of the second rotating member 8 would occur, and consequently a further increase in the machine speed.

If, on the contrary, starting from an initial condition in which the third rotating member is free to rotate while the second rotating member 8 connected to the driving wheels "R" is motionless, a torque were imparted to the third rotating member in the same way as the rotation direction of same, it would be possible to obtain reversal of the running direction because the counter-rotation action generated by said torque would overcome the motive action transmitted by the endothermic engine "M" to the first rotating member 7.

On the other hand, another modality is preferable to this modality of running reversal, i.e. a modality in which suitable switching operations are carried'out in the fluid connections between the first hydraulic pump 3 and the corresponding first hydraulic motor 4, in such a manner that it is sufficient to reverse a circulation direction of the working fluid between the first hydraulic pump 3 and the first hydraulic motor 4 for obtaining a reversal of the rotation direction of the first rotating member 7, and consequently of the running direction. Advantageously, this switching gives rise to a symmetric behaviour of the machine, because operation of the reduction unit 6 remains unchanged although the rotation direction of the first rotating member 7 varies. Consequently, the traction curve of the machine is perfectly symmetric, i.e. the maximum speed of the machine moving forward has the same intensity as the maximum speed of the machine going in reverse, no difference being present between an operation of the machine in normal running conditions and an operation of the machine going in reverse.

In order to obtain braking of the third rotating member 9 it is necessary to remove at least part of the power flowing within the reduction unit 6 and coming from the endothermic engine "M" through the first hydraulic pump 3 and the first hydraulic motor 4. This removal is advantageously obtained by the regulation means 10 through generation of a power flow from the third rotating member 9 towards the hydraulic pump 3, in such a manner as to at least partly recover this power by reintegrating the same into the drive unit 2.

On the contrary, if a motive torque in the same way as said braking torque is wished to be applied to the third rotating member 9, i.e. if the rotation speed of the second rotating member 8 is wished to be increased beyond the limit constituted by said "direct drive" condition, it is necessary for the regulation means 10 to provide an additional power flow towards the reduction unit 6, and in particular towards the third rotating member 9.

Under this circumstance, this power flow should be directed by the endothermic engine "M" or alternatively by the first hydraulic pump 3, to the third rotating member 9 of the reduction unit 6.

To achieve these power flows, the regulation means 10 comprises a second hydraulic pump 11 and a second hydraulic motor 12, in fluid communication with each other and operatively active between the third rotating member 9 and the first hydraulic pump 3 to transmit power at least from the third rotating member 9 to the first hydraulic pump 3, in such a manner as to obtain recovery of part of the mechanical power flowing through the reduction unit 6 concurrently with variation of the respective gear ratio by a braking action on the third rotating member 9 itself.

The second hydraulic pump 11 and the second hydraulic motor 12 are in addition operatively active between the endothermic engine "M" and the third rotating member 9 at least for transmitting power from the endothermic engine "M" to the third rotating member 9, in particular for generating a thrust torque on the third rotating member 9 adapted to increase the machine speed.

Preferably, the second hydraulic pump 11 and the second hydraulic motor 12 act in a bi-directional manner both between the third rotating member 9 and the first hydraulic pump 3, and between the endothermic engine "M" and the third rotating member 9. Following said bi-directional operation, both the second hydraulic pump 11 and the second hydraulic motor 12 are intended to be suitable for operation in both power flows, i.e. each of them can operate in a reversible manner both as a hydraulic pump and as a hydraulic motor.

Preferably, in addition, both the second hydraulic pump 11 and the second hydraulic motor 12 are of the piston type, and at least one of them, preferably the second hydraulic pump 11, has a variable displacement depending on the power to be transmitted through the second hydraulic pump 11 itself.

The second hydraulic pump 11 is further preferably directly connected to the endothermic engine "M", in particular to the already mentioned flanged portions of the endothermic engine "M".

Advantageously, in addition, the second hydraulic pump 11 is connected to the first hydraulic pump 3 for transmitting a power flow to the latter, which power flow is picked up by the third rotating member 9. This connection is preferably of the mechanical type or, alternatively, of the hydraulic type.

In accordance with the view in Fig. 1, the second hydraulic pump 11 is part of the first portion 1a of apparatus 1, and in the event of application to a railway machine the second hydraulic pump 11 is then supported on the machine body. On the contrary, the second hydraulic motor 12 is preferably mechanically fastened in a direct manner to the reduction unit 6 and is therefore supported by a bogie "C" of the railway machine. Operating connection between the second hydraulic pump 11 and the second hydraulic motor 12, i.e. power exchange between them, is exclusively obtained by fluid communication, and in particular through one or more second ducts 13 of the type adapted to cause circulation of a fluid at high pressures.

Apparatus 1 further comprises first feedback means 14, acting on the regulation means 10 to set an optimal value of the gear ratio at least as a function of a pressure value of the working fluid actuating the first hydraulic motor 4, i.e. as a function of a pressure value of the working fluid upstream of the first hydraulic motor 4.

In the preferred embodiment illustrated, the feedback means 14 comprises a pressure sensor 15, active on the drive unit 2 to detect a pressure value of the working fluid upstream of the first hydraulic motor 4, and a control box 16, connected to the pressure sensor 15 and acting on the regulation means 10.

The control box 16, in detail, acts on the second hydraulic pump 11 to vary the flow rate of same as a function of the pressure value of the working fluid detected by the pressure sensor, in accordance with a feedback principle to be clarified in the following. It is apparent that, should the second hydraulic motor 12 be the one having a variable displacement, the control box 16 would act on said second hydraulic motor 12.

An example concerning operation of the apparatus is hereinafter described.

Starting from a condition of motionless machine, i.e. in which at least' the second rotating member 8 of the reduction unit 6 is at a standstill, a starting command is given to the machine, which command results in a power flow through apparatus 1, in particular from the endothermic engine "M" to the first rotating member 7 of the reduction unit 6. The third rotating member 9 is maintained free to rotate because, in case of locking of the latter, a unitary or substantially unitary gear ratio would be generated, which is quite disadvantageous under conditions of rapid acceleration of the machine and would preclude rapid acceleration (pickup) of the machine itself particularly under heavy towing conditions.

In more detail, the condition of too much stress on starting results in an important increase in the pressure of the working fluid immediately upstream of the first hydraulic motor 4, or more simply inside the first ducts 5, that is detected by pressure sensor 15. Under this circumstance, it would be necessary to greatly increase the number of revolutions and/or the load of the endothermic engine "M", in such a manner as to supply more power towards the driving wheels "R". However, this solution could lead the endothermic engine "M" to operate to a non-optimal rotation speed and/or to a non-optimal load value or at all events under conditions that are far from those of maximum efficiency. Under some circumstances, in addition, saturation of the maximum machine power could occur, due to absorption of the maximum mechanical power that can be delivered by the endothermic engine "M".

It is therefore preferable to act on the gear ratio of the reduction unit 6, instead of directly acting on the endothermic engine "M", which gear ratio as seen, is advantageously continuously variable along the whole operating range of the machine.

To this aim, the pressure signal detected by pressure sensor 15 is sent to the control box 16 that, depending on this value, determines a corresponding flow rate of the second hydraulic pump 11 which, in turn, directly affects the power absorbed by the third rotating member 9 and therefore the gear ratio of the reduction means 6. In particular, should the detected pressure value be excessive, the control box 16 would operate an increase in the gear ratio by a reduction in the braking action carried out by the third rotating member 9. In this manner a more favourable gear ratio is generated which favours pickup of the machine.

Consequently, resistance of the machine to starting decreases and therefore there is a decrease in the pressure of the working fluid upstream of the first hydraulic motor 4. As a consequence of that, the pressure value detected by pressure sensor 15 is lower than before and indicates to the control box 16 that the gear ratio can be reduced in order to increase the machine speed. This results in an action of the control box 16 that, by acting on the second hydraulic pump 11, progressively increases the braking action on the third rotating member 9. Taking into account the fact that this feedback operating principle occurs continuously during starting and running of the machine, it is possible to become aware of the fact that it achieves an advantageous self-regulation effect of the operation of apparatus 1 and therefore of the machine running.

According to an embodiment not shown, apparatus 1 comprises second feedback means acting on the endothermic engine "M" for varying the rotation speed and/or the load of the endothermic engine "M", although within limits imposed by efficiency drops of the endothermic engine "M" itself, in case of broad ranges or travels in the rotation speed of same.

The above in particular refers to operation adjustment of an axle having two wheels, of a traction machine.

Referring particularly to railway machines, where the traction axles are generally four or six at most, divided into two or three bogies, each axle of each bogie is connected to a respective drive unit, a respective reduction unit and respective regulation means. In the presence of a single endothermic engine equipping the railway machine, all first and second hydraulic pumps are mechanically connected to the single endothermic engine, in particular to a respective flanged portion of same. Alternatively, in particular for two-bogie machines, equipment with two endothermic engines can be provided, each of which drives a respective bogie. In the last-mentioned case each endothermic engine is mechanically connected to a pair of first hydraulic pumps and a second pair of hydraulic pumps.

The present invention reaches the intended purposes overcoming the drawbacks complained in the known art.

The presence of a mechanical transmission clear of mechanical coupling members such as mechanical friction clutches and gear clutches allows great reliability in particular connected with the absence of mechanical friction clutches use of which in high-power applications has proved not to be convenient at least from an economical point of view.

The absence of mechanical friction clutches and gear clutches allows the overall efficiency of the machine to be improved, since friction clutches are by themselves a source of great energy dissipation during coupling and uncoupling and on starting.

The presence of a reduction unit adapted to generate a variable gear ratio in a continuous manner along the whole operating range of the machine makes it possible to eliminate speed gears and said mechanical friction clutches. In addition, the braking action exerted on the third rotating member to vary the gear ratio does not introduce any power dissipation because the spent power for exerting said braking action is then recovered and re-integrated into the drive unit.

The absence of discrete values of the gear ratio, together with the self-regulation principle of apparatus 1, allows the machine speed to be adjusted to the conditions of each railway track section travelled by the machine. By way of example, in case of running on a path in a downward direction, the machine carries out self-regulation for proceeding to greater speeds than when running on a flat surface, which greater speeds are determined by less resistance to motion. This circumstance would not take place with a gear shift because the machine speed cannot arbitrarily increase without any modification of the gear ratio through shifting, in particular due to limits in the rotation speed of the endothermic engine.

As also shown in Fig. 1, in addition, the two portions of the apparatus are interconnected with each other exclusively by the first and second ducts. The latter, being flexible, are of simple and flexible installation and allow an important space saving with particular reference to the railway bogie, which is lighter in weight. As a result, there is also an economy in costs.

## Claims

1. A transmission apparatus for endothermic-driven machines comprising:
- at least one drive unit (2) of the hydraulic type, adapted to be connected to an endothermic engine (M) of a traction machine for receiving a mechanical power from said endothermic engine (M) and transmitting at least part of said mechanical power in a regulated manner to a driven shaft (A) connected to one or more driving wheels (R) of the traction machine;
- at least one reduction unit (6) active between the drive unit (2) and said driven shaft (A) so as to vary the gear ratio between the number of revolutions of the endothermic engine (M) and the number of revolutions of said driving wheels (R), said reduction unit (6) defining a gear ratio continuously variable along a whole operating range of the traction machine;
- regulation means (10) acting on the reduction unit (6) for continuously varying said gear ratio along the whole operating range of the traction machine.

2. An apparatus as claimed in claim 1, **characterised in that** said drive unit (2) comprises:
- a first hydraulic pump (3) to be connected to said endothermic engine (M) for receiving a mechanical power from said endothermic engine (M) and transmitting at least part of said power to a working fluid;
- a first hydraulic motor (4) connected to said first hydraulic pump (3) and in fluid communication with the same for receiving a motive power from said working fluid and transmitting said power to said driven shaft (A), said reduction unit (6) being operatively active downstream of said first hydraulic motor (4) relative to a flow of said power.

3. An apparatus as claimed in claim 2, **characterised in that** said first hydraulic pump (3) determines a flow rate value that is variable as a function of at least one power value to be transmitted to the driving wheels (R).

4. An apparatus as claimed in claim 2 or 3, **characterised in that** said first hydraulic pump (3) is directly connected to the endothermic engine (M) by mechanical coupling, said first hydraulic motor (4) being directly connected to the reduction unit (6) by mechanical coupling and being connected to said first hydraulic pump (3) by fluid communication exclusively.

5. An apparatus as claimed in one or more of the preceding claims, **characterised in that** said reduction unit (6) comprises a kinematic arrangement having a triad of rotating members (7, 8, 9) interconnected with each other for carrying out mutual transmission of a rotation motion, a first one (7) of said rotating members (7, 8, 9) being connected to a power flow from said drive unit (2), a second one (8) of said rotating members (7, 8, 9) being connected to said driven shaft (A), the third (9) of said rotating members (7, 8, 9) being connected to said regulation means (10) to directly influence a rotation speed of said second rotating member (8) relative to the first rotating member (7) in such a manner as to vary said gear ratio, said reduction unit (6) preferably comprising an epicyclical train.

6. An apparatus as claimed in claims 2 and 5, **characterised in that** said regulation means (10) is operatively active in a bi-directional manner between said first hydraulic pump (3) and third rotating member (9) to carry out transfer of mechanical power between said first hydraulic pump (3) and third rotating member (9) so as to vary said gear ratio.

7. An apparatus as claimed in claim 6, **characterised in that** said regulation means (10) is connected to said first hydraulic pump (3) to exchange a hydraulic and/or mechanical power with said first hydraulic pump (3), said regulation means (10) being adapted to pick up power from said third rotating member (9) and transfer it to said first hydraulic pump (3) in such a manner as to obtain recovery of said power.

8. An apparatus as claimed in claims 2 and 5, **characterised in that** said regulation means (10) comprises:
- a second hydraulic pump (11) suitable for connection to said endothermic engine (M) for receiving a mechanical power from said endothermic engine (M), and
- a second hydraulic motor (12), in fluid communication with said second hydraulic pump (11) and the third rotating member (9) of the reduction unit (6) for transmitting a power flow between said third rotating member (9) and second hydraulic pump (11).

9. An apparatus as claimed in claim 8, **characterised in that** said second hydraulic pump (11) and second hydraulic motor (12) have a reversible operation to enable transmission of a power flow in a bi-directional manner between said third rotating member (9) and second hydraulic pump (11).

10. An apparatus as claimed in claim 8 or 9, **characterised in that** at least one of said second hydraulic pump (11) and second hydraulic motor (12) determines a variable flow rate value as a function at least of a power value to be transmitted through said one of said second hydraulic pump (11) and second hydraulic motor (12).

11. An apparatus as claimed in claim 8, **characterised in that** said second hydraulic pump (11) is directly connected to the endothermic engine (M) by mechanical coupling, said second hydraulic motor (4) being directly connected to the reduction unit (6) by mechanical coupling and being connected to said second hydraulic pump (11) by fluid communication exclusively.

12. An apparatus as claimed in claim 5, **characterised in that** said epicyclical train comprises a central rotor, an outer crown and a plurality of intermediate rotors interposed between the crown and central rotor, said intermediate rotors being mutually interconnected by a supporting fork, said central rotor, crown and supporting fork arbitrarily defining said first (7), second (8) and third (9) rotating members.

13. An apparatus as claimed in claim 5, **characterised in that** said reduction unit (6) comprises a mechanical differential, preferably said mechanical differential comprising an outer crown and a pair of pinions rotating about the same axis and kinematically connected to each other for carrying out mutual transmission of a rotation motion, said crown and each of said two pinions arbitrarily defining said first (7), second (8) and third (9) rotating members.

14. An apparatus as claimed in claim 2, **characterised in that** it comprises first feedback means (14) acting on the regulation means (10) for setting an optimal value of said gear ratio at least as a function of a pressure value of the working fluid actuating said first hydraulic motor (4).

15. An apparatus as claimed in claim 1, **characterised in that** it comprises second feedback means acting on the endothermic engine (M) for adjusting a value of rotation speed and/or load of said endothermic engine (M) at least as a function of a detected parameter.

16. An apparatus as claimed in one or more of the preceding claims, **characterised in that** it comprises a plurality of drive units (2) of the hydraulic type, each of which is associated with a respective reduction unit (6) and respective regulation means (10), each of said drive units (2) being associated with said endothermic engine (M) and acting on one or more of the respective driving wheels (R) of the traction machine.
